Europäisches Patentamt

European Patent Office

Office européen des brevets

(11) Publication number: **0 211 635 B1**

# EUROPEAN PATENT SPECIFICATION

(45) Date of publication of patent specification: **23.12.92**   (51) Int. Cl.⁵: **H02M  3/337**

(21) Application number: **86305964.8**

(22) Date of filing: **01.08.86**

(54) **Switching power supplies.**

(30) Priority: **13.08.85 US 765404**

(43) Date of publication of application:
**25.02.87 Bulletin  87/09**

(45) Publication of the grant of the patent:
**23.12.92 Bulletin  92/52**

(84) Designated Contracting States:
**DE FR GB IT SE**

(56) References cited:
**US-A- 3 579 078
US-A- 3 947 703
US-A- 4 017 781
US-A- 4 322 817**

(73) Proprietor: **INTERNATIONAL CONTROL AUTO-
MATION FINANCE S.A.
16 Rue des Bains
Ville de Luxembourg(LU)**

(72) Inventor: **Whitford, Rowland Edgar
6230 Ravenna Road
Painesville Ohio 44077(US)**

(74) Representative: **Cotter, Ivan John et al
D. YOUNG & CO. 10 Staple Inn
London WC1V 7RD(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to switching power supplies.

Normally, a low power supply is of less than 50 mW, with split voltage sources (positive voltages) being accomplished by establishing a floating common (elevated) or by a low efficiency switching power supply. It is imperative, however, that a power supply operating from a 4-20 mA current loop be highly efficient to maximise circuit functions.

Two-wire analog transmission systems are known. Such systems include a transmitter which is connected to a power supply by two wires which form a current loop. The transmitter includes, as at least one of its features, a transducer which senses a condition such as pressure or temperature. This condition is known as a process variable (PV).

The power supply is connected to the two wires to close the current loop. It is also known to provide a resistor in the current loop. The transmitter amplifies the signal from its transducer and this amplified signal is used to draw a certain current from the power supply which is proportional or otherwise related to the process variable. It is known to draw from a minimum of 4 mA to a maximum of 20 mA. The current between 4 and 20 mA passes through the resistor to produce a voltage drop across the resistor. This voltage drop can be measured to give a value for the process variable.

It is noted that the 4 mA minimum current is required to energise the circuitry of the transmitter. Any excess current above this 4 mA level is taken as a value which can be used to determine the process variable.

It is known that such 4-20 mA two-wire systems have an accuracy which is limited to around 0.1% at best. These systems are also essentially unidirectional with the transmitter being essentially uncontrolled and transmitting continuously.

A switching regulated push-pull converter which provides a highly regulated output voltage from a dc supply is disclosed in US Patent No. 4,322,817. The converter includes two power transistor switches in push-pull configuration that power multiple output circuits via a transformer. The output circuits include filtering and regulating means and an output transistor which generates a direct current output voltage.

US Patent No. 4,502,104 discloses switching power supply circuits in which field effect transistors (specifically MOSFETs) are used in order to take advantage of their low power losses.

According to the invention there is provided a switching power supply comprising:

a switching transformer having a primary winding with at least two spaced apart connection points and at least one secondary winding;

an input circuit comprising positive and negative input lines for applying a primary voltage to the primary winding;

a transistor connected between a first of the primary winding connection points and one of the input lines;

an oscillator having an output connected to the transistor for chopping the primary voltage supplied to the primary winding; and

a full-wave rectifier connected across the secondary winding of the switching transformer for rectifying a c voltage from the secondary winding into d c voltage;

characterised in that:

the input circuit further includes a constant current source and a Zener diode connected in series with the constant current source across the input lines to provide a constant voltage source for the primary winding;

a second of the at least two connection points of the primary winding is connected to one side of the Zener diode; and

the transistor is a field effect transistor having a source and a drain connected between the first of the primary winding connection points and the other side of the Zener diode, and the output of the oscillator is connected to the gate of the field effect transistor.

Preferably, the switching power supply provides low power with high efficiency. The switching transformer is a low loss switching transformer and the oscillator is a low power oscillator having an output connected to the base of the field effect transistor.

The rectifier may be a full wave rectifier which has one pair of legs connected across the secondary winding and a second pair of legs connected to a filter circuit for further filtering voltage from the secondary winding.

The power supply may comprise two secondary windings and two field effect transistors connected at opposite ends of the primary winding, one of the secondary windings having an intermediate terminal connected to earth (ground) and the other of the secondary windings having an intermediate terminal connected to another one of the plus and minus input lines for acting as a common floating reference.

A preferred form of switching power supply embodying the present invention and described hereinbelow can be utilised on a microcomputer based "smart" transmitter for 4-20 mA current loops. The preferred power supply has improved efficiency over known power supplies for 4-20 mA current loops. The preferred power supply is a low power, high efficiency switching power supply which is simple in design, rugged in construction and economical to manufacture.

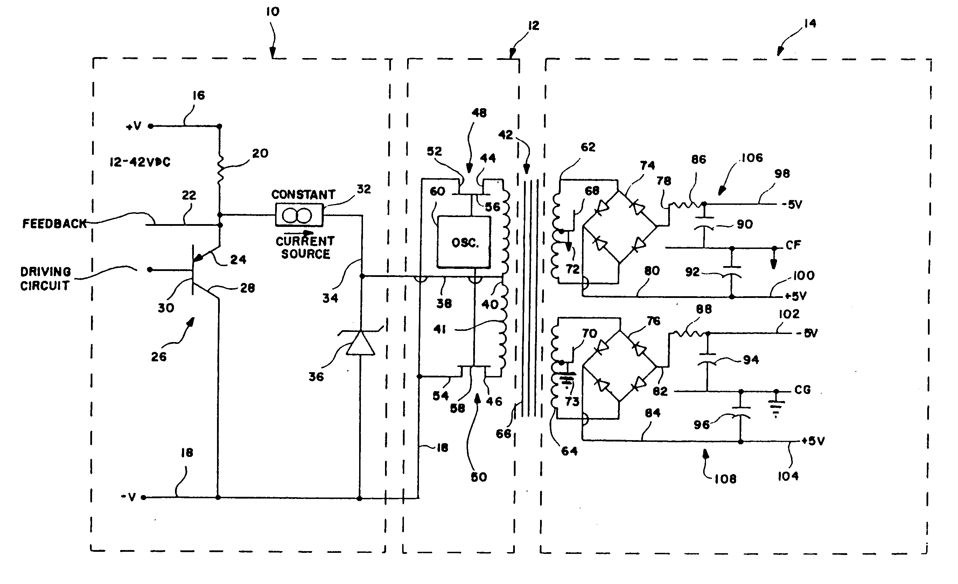

The invention will now be further described, by way of illustrative and non-limiting example, with reference to the accompanying drawing, the sole figure of which is a schematic circuit diagram of a low power, high efficiency switching power supply embodying the invention.

The sole figure of the drawing is a circuit diagram of a low power, high efficiency switching power supply which has been found to have an efficiency of 87 to 92%. This results in additional functions and increased operating speed (response time) for microprocessor based smart transmitters, (the transmitter is monitored by a microprocessor while still on line), which are used with a 4-20 mA current loop system.

The illustrated power supply includes an input circuit assembly 10 which receives a primary voltage of between 12 and 42 volts d c. The input circuit assembly 10 may be connected to a current loop of a known proportional 4-20 mA process control system. The function of the input circuit assembly 10 is to provide a constant current and voltage to an isolating circuit assembly 12.

The isolating circuit assembly 12 receives the constant voltage and current signal from the input circuit assembly 10, and electromagnetically couples this signal to an output circuit assembly 14. This provides electrical isolation between the input circuit assembly 10 and the output circuit assembly 14.

The output circuit assembly 14 comprises two ± 5v d c power outputs to establish an output signal that is filtered and isolated from the input circuit assembly 10.

The input circuit assembly 10 receives the 12-42 volt d c signal from the proportional 4-20 mA process control loop on lines 16 and 18. A resistor 20 is connected in parallel to the line 16 and a feedback line 22. An emitter 24 of a transistor 26 is connected in parallel to the feedback line 22 and in series with the resistor 20. A collector 28 of the transistor 26 is connected in parallel to the line 18 and to a base 30 of the same transistor 26. The base 30 is connected to a driving circuit such as a microprocessor (not shown). A constant current source 32 is connected in parallel to the resistor 20 and the emitter 24 and in series with a Zener diode 36 along a line 34. The Zener diode 36 is then connected in parallel to the input line 18.

The isolation circuit 12 is connected to the input circuit assembly 10 along a line 38 which is connected in parallel from the line 34 to a centre tap 40 of a primary winding 41 of a low loss switching transformer 42. Opposite ends of the primary winding 41 are connected to sources 44 and 46 of a pair of metal oxide semiconducting field effect transistors (MOSFETs) 48 and 50 respectively. Drains 52 and 54 of the respective MOSFETs 48 and 50 are connected into the input line 18. Gates 56 and 58 of the respective MOSFETs 48 and 50 are connected to the low power oscillator 60.

A pair of secondary windings 62 and 64 are coupled to the primary winding 41 through a core 66 of the transformer 42. A pair of centre taps 68 and 70 are connected to reference voltage points 72,73 and respectively chosen by the user. The ends of the second windings 62 and 64 are connected to a pair of known Schottky diode bridge rectifier circuits 74 and 76, respectively. A pair of known resistor-capacitor (RC) filtering networks 106 and 108 are connected to the rectifier circuits 74 and 76 by lines 78,80 and 82,84 respectively. A pair of resistors 86 and 88 form the resistor-capacitor filtering networks 106 and 108 with capacitors 90,92 and 94,96, respectively. The output circuit 14 provides two pairs of output lines 98,100 and 102,104 that are connected in parallel to their respective filter circuits 106 and 108, respectively.

In operation, the input lines 16 and 18 of the input circuit 10 are connected to a process control loop which provides a 4-20 mA signal proportional to a process variable. The input 4-20 mA current creates a voltage across the resistor 20. Since this current is proportional to the process variable, the voltage created on the resistor 20 is also proportional to the process variable and may be used to obtain a reading of the process variable. A known driving circuit (not shown) such as a microprocessor produces a signal which drives the base 30 of the transistor 26. This allows current to flow from the emitter 24 to the collector 28 of the transistor 26. This driving signal is also proportional to the process variable. As the base 30 of the transistor 26 is being driven by the driving circuit, a signal which is also proportional to the process variable flows back through the feedback line 22.

The constant current source 32, which may be a group of transistors and resistors that provide a current of constant magnitude regardless of load in a known manner, supplies the isolating circuit 12 with non-varying current along the lines 34 and 38. The Zener diode 36 regulates the voltage across the isolating circuit 12 and prevents any a c power from the circuit 12 from going back through the lines 38 and 34 into the line 18 and thence back into the 4-20 mA current loop.

The isolating circuit 12 receives the constant current from the constant current source 32 of the input circuit 10 along the lines 34 and 38 at the centre tap 40 of the switching transformer 42. The core 66 of the transformer 42 is preferably a toroidal coil to reduce primary to secondary leakage losses by improved winding distribution. The transformer 42 is specially designed in that it operates at low flux densities (100-500 gauss or 1.0 - 5.0 x $10^{-4}$ Tesla) so as also to reduce core losses.

The low power oscillator 60 alternately puts a signal on the gates 56 and 58 of the respective MOSFETs 48 and 50. The signals turn on the gates 56 and 58 alternately, allowing current to flow alternately from the centre tap 40, through the primary coil 41, through the sources 44 and 46 to the respective drains 52 and 54 of the respective MOSFETs 48 and 50. The low power oscillator 60 in most previously designed power supplies of this type would alternately drive a pair of ordinary transistors instead of the MOSFETs 48 and 50. By utilising MOSFETs, which have low power gate drive characteristics and fast switching characteristics, instead of ordinary transistors, switching losses are greatly minimised. The oscillator 60 should have a frequency of 10 kHz or less to further reduce overall switching losses in the MOSFETs, the transformers, etc.

The alternating current flowing through the primary coil 41 steps down to the two secondary windings 62 and 64 of the transformer 42. Each of the secondary windings 62 and 64 has a centre tap 68 and 70, respectively. The centre taps 68,70 are common points for the two ± 5V supply outputs of the output circuit 14.

Either end of both the secondary windings 62 and 64 supply the input side of the known bridge rectifier circuits 74 and 76, respectively. Schottky diodes are used in the circuits 74 and 76 to minimise switching losses. These known bridge rectifier circuits 74 and 76 change the a c voltages from the secondaries 62 and 64 to d c voltages in a known manner. The outputs of these bridge circuits 74 and 76 supply unfiltered d c voltages to the output circuit 14.

The output circuit 14 has the two known RC filter networks 106 and 108 that filter the rough d c voltages from the isolating circuit 12 into steady ± 5v d c sources. The output lines 98 and 102 supply a d c signal 5v below the chosen reference points 72 and 73, respectively, and the lines 100 and 104 supply a d c signal 5v above the chosen reference points 72 and 73, respectively.

Thus it is seen that the power supply described hereinbefore provides an output supply signal along the lines 98,100 and 102,104 that is a low power and high efficiency supply with an efficiency of 87 to 92%. This results in increased response time for transmitters used in a 4-20 mA current loop.

## Claims

1. A switching power supply comprising:
   a switching transformer (42) having a primary winding with at least two spaced apart connection points and at least one secondary winding (e.g. 64);
   an input circuit (10) comprising positive and negative input lines (16, 18) for applying a primary voltage to the primary winding (41);
   a transistor (e.g. 48) connected between a first of the primary winding connection points and one of the input lines (16, 18);
   an oscillator (60) having an output connected to the transistor (e.g. 48) for chopping the primary voltage supplied to the primary winding (41); and
   a full-wave rectifier (e.g. 76) connected across the secondary winding (e.g. 64) of the switching transformer (42) for rectifying a c voltage from the secondary winding (e.g. 64) into d c voltage;
   characterised in that:
   the input circuit (10) further includes a constant current source (32) and a Zener diode (36) connected in series with the constant current source (32) across the input lines (16, 18) to provide a constant voltage source for the primary winding (41);
   a second (40) of the at least two connection points of the primary winding (41) is connected to one side of the Zener diode (36); and
   the transistor (e.g. 48) is a field effect transistor having a source and a drain connected between the first of the primary winding connection points and the other side of the Zener diode (36), and the output of the oscillator (60) is connected to the gate of the field effect transistor.

2. A power supply according to claim 1, wherein the second connection point (40) of the primary winding (41) is connected to a side of the Zener diode (36) which is connected to the constant current source (32).

3. A power supply according to claim 2, wherein the rectifier (e.g. 76) has a first pair and a second pair of legs, the first pair of legs being connected across the secondary winding (e.g. 64) and a capacitive filter circuit (e.g. 108) being connected across the second pair of legs.

4. A power supply according to claim 3, wherein the primary winding (41) includes a third connection point spaced apart from said first and second connection points with said second connection point (40) situated between said first and third connection points, and in which a second field effect transistor (e.g. 50) having a source and drain is connected between the third connection point and said one of the input lines (16, 18), the oscillator (60) is connected to a gate of the second field effect transistor (50), the transformer (42) includes a second secondary winding (62), and a second full-wave rectifier (74) is connected across the second secondary winding (62).

5. A power supply according to claim 4, wherein the second full-wave rectifier (74) has a first pair and a second pair of legs, the first pair of legs being connected across the second secondary winding (62) and a second capacitive filter circuit (106) being connected across the second pair of legs of the second rectifier (74).

6. A power supply according to claim 5, wherein the first mentioned secondary winding (64) includes a centre tap connected to earth, the first mentioned capacitive filter circuit (108) comprising a pair of capacitors (94, 96) each having one end connected to one of the second pair of legs of the first mentioned rectifier (76) and an opposite end connected to earth.

7. A power supply according to claim 6, wherein the second secondary winding (68) includes a central tap connected to the other of the input lines, the second capacitive filter circuit (106) comprising a pair of capacitors (90, 92) each having one end connected to one of the second pair of legs of the second rectifier (74) and an opposite end connected to the other of the input lines.

**Patentansprüche**

1. Getaktete Leistungsversorgung mit:

   einem Schalttransformator (42), der eine Primärwicklung mit zumindest zwei beabstandeten Anschlußpunkten sowie zumindest eine Sekundärwicklung hat (z.B. 64),

   einem Eingangskreis (10), der positive und negative Eingangsleitungen (16, 18) für das Anlegen einer Primärspannung an die Primärwicklung (41) hat,

   einem Transistor (z.B. 48), der zwischen einem ersten Anschlußpunkt der Anschlußpunkte der Primärwicklung und einer der Eingangsleitungen (16, 18) angeschlossen ist,

   einem Oszillator (60), der einen Ausgang hat, welcher mit dem Transistor (z.B. 48) verbunden ist für ein taktweises Unterbrechen (Choppen) der Primärspannung, welche der Primärwicklung (41) zugeführt wird, und

   einem Gegentaktgleichrichter (z.B. 76), der an die Sekundärwicklung (z.B. 64) des Schalttransformators (42) angeschlossen ist, um eine Wechselspannung von der Sekundärwicklung (z.B. 64) zu einer Gleichspannung gleichzurichten,

   dadurch gekennzeichnet, daß

   der Eingangskreis (10) weiterhin eine Konstantstromquelle (32) und eine Zenerdiode (36) aufweist, die in Reihe mit der Konstantstromquelle (32) an die Eingangsleitungen (16, 18) angeschlossen ist, um eine Konstantspannungsquelle für die Primärwicklung (41) bereitzustellen,

   ein zweiter (40) der zumindest zwei Anschlußpunkte der Primärwicklung (41) mit einer Seite der Zenerdiode (36) verbunden ist und

   der Transistor (z.B. 48) ein Feldeffekttransistor ist, dessen Source und Dran (Quelle und Senke) zwischen dem ersten Anschlußpunkt der Anschlußpunkte der Primärwicklung und die andere Seite der Zenerdiode (36) geschaltet ist, und daß der Ausgang des Oszillators (60) mit dem Gate (Gate-Anschluß) des Feldeffekttransistors verbunden ist.

2. Leistungsversorgung (Strom-/Spannungsversorgung) nach Anspruch 1, wobei ein zweiter Anschlußpunkt (40) der Primärwicklung (41) mit einer Seite der Zenerdiode (36) verbunden ist, welche mit der Konstantstromquelle (32) verbunden ist.

3. Leistungsversorgung nach Anspruch 2, wobei der Gleichrichter (z.B. 76) ein erstes Paar und ein zweites Paar von Anschlußbeinen hat, wobei das erste Paar von Anschlußbeinen an die Sekundärwicklung (z.B. 64) angeschlossen und ein kapazitiver Filterschaltkreis (z.B. 108) an das zweite Paar von Anschlußbeinen angeschlossen ist.

4. Leistungsversorgung nach Anspruch 3, wobei die Primärwicklung (41) einen dritten Anschlußpunkt aufweist, der von den ersten und zweiten Anschlußpunkten beabstandet ist, wobei der zweite Anschlußpunkt (40) zwischen dem ersten und dritten Anschlußpunkt liegt, und wobei ein zweiter Feldeffekttransistor (z.B. 50) mit seinem Source- und seinem Drain-Anschluß zwischen den dritten Anschlußpunkt und die eine der Eingangsleitungen (16, 18) geschaltet ist, wobei der Oszillator (60) mit einem Gate-Anschluß des zweiten Feldeffekttransistors (50) verbunden ist, der Transformator (42) eine zweite Sekundärwicklung (62) aufweist und ein zweiter Gegentaktgleichrichter (74) an die zweite Sekundärwicklung (62) angeschlossen ist.

**5.** Leistungsversorgung nach Anspruch 4, wobei der zweite Gegentaktgleichrichter (74) ein erstes Paar und ein zweites Paar von Anschlußbeinen hat, wobei das erste Paar von Anschlußbeinen an die zweite Sekundärwicklung (62) angeschlossen ist und ein zweiter kapazitiver Filterschaltkreis (106) an dem zweiten Paar von Anschlußbeinen des zweiten Gegentaktgleichrichters (64) liegt.

**6.** Leistungsversorgung nach Anspruch 5, wobei die zuerst erwähnte Sekundärwicklung (64) einen zentralen Anschluß aufweist, der mit Masse verbunden ist, wobei der ersterwähnte kapazitive Filterschaltkreis (108) ein Paar von Kondensatoren (94, 96) aufweist, die mit einem Ende jeweils mt einem Bein des zweiten Anschlußbeinpaares des zuerst erwähnten Gegentaktgleichrichters (76) und mit dem gegenüberliegenden Ende mit Masse verbunden sind.

**7.** Leistungsversorgung nach Anspruch 6, wobei die zweite Sekundärwicklung (68) einen zentralen Anschluß aufweist, der mit der anderen der Eingangsleitungen verbunden ist, wobei der zweite kapazitive Filterschalreis (106) ein Paar von Kondensatoren (90, 92) aufweist, die mit einem Ende jeweils mit einem Bein des zweiten Paares von Anschlußbeinen des zweiten Gegentaktgleichrichters (74) verbunden und mit einem gegenüberliegenden Ende an die andere der Eingangsleitungen angeschlossen sind.

## Revendications

**1.** Alimentation en courant à commutation comprenant :

un transformateur de commutation (42) ayant un enroulement primaire avec au moins deux points de connexion espacés et au moins un enroulement secondaire (par exemple 64) ;

un circuit d'entrée (10) comprenant des lignes d'entrée positive et négative (16, 18) pour appliquer une tension primaire à l'enroulement primaire (41) ;

un transistor (par exemple 48) connecté entre un premier des points de connexion de l'enroulement primaire et l'une des lignes d'entrée (16, 18) ;

un oscillateur (60) dont une sortie est connectée au transistor (par exemple 48) pour découper la tension primaire délivrée à l'enroulement primaire (41) ; et

un redresseur à double alternance (par exemple 76) connecté aux bornes de l'enroulement secondaire (par exemple 64) du transformateur de commutation (42) pour redresser la tension alternative issue de l'enroulement secondaire (par exemple 64) en une tension continue ;

caractérisé en ce que :

le circuit d'entrée (10) comprend de plus une source de courant constant (32) et une diode de Zener (36) connectée en série avec la source de courant constant (32) aux bornes des lignes d'entrée (16, 18) pour fournir une source de courant constant pour l'enroulement primaire (41) ;

le second (40) des au moins deux points de connexion de l'enroulement primaire (41), est connecté à un côté de la diode de Zener (36) ; et

le transistor (par exemple 48) est un transistor à effet de champ comportant une source et un drain connectés entre le premier des points de connexion de l'enroulement primaire et l'autre côté de la diode de Zener (36), et en ce que la sortie de l'oscillateur (60) est connectée à la grille du transistor à effet de champ.

**2.** Alimentation en courant selon la revendication 1, dans laquelle le second point de connexion (40) de l'enroulement primaire (41) est connecté à un côté de la diode de Zener (36) qui est connecté à la source de courant constant (32).

**3.** Alimentation en courant selon la revendication 2, dans laquelle le redresseur (par exemple 76) possède une première paire et une seconde paire de branches, la première paire de branches étant connectée aux bornes de l'enroulement secondaire (par exemple 64) et un circuit filtre capacitif (par exemple 108) qui est connecté aux bornes de la seconde paire de branches.

**4.** Alimentation en courant selon la revendication 3, dans laquelle l'enroulement primaire (41) comporte un troisième point de connexion espacé par rapport audit premier et audit deuxième points de connexion, ledit deuxième point de connexion (40) étant situé entre ledit premier et ledit troisième points de connexion, et dans laquelle un second transistor à effet de champ (par exemple 50), ayant une source et un drain, est connecté entre le troisième point de connexion et ladite une des lignes d'entrée (16, 18), l'oscillateur (60) est connecté à la grille du second transistor à effet de champ (50), le transformateur comprend un second enroulement secondaire (62), et un second redresseur à double alternance (74) est connecté aux bornes du second enroulement secondaire (62).

**5.** Alimentation en courant selon la revendication 4, dans laquelle le second redresseur à double alternance (74) possède une première paire et une seconde paire de branches, la première paire de branches étant connectée aux bornes du second enroulement secondaire (62) et un second circuit filtre capacitif (106) étant connecté aux bornes de la seconde paire de branches du second redresseur (74).

**6.** Alimentation en courant selon la revendication 5, dans laquelle le premier enroulement secondaire mentionné (64) comprend une prise centrale connectée à la masse, le premier circuit filtre capacitif mentionné (108) comprend une paire de condensateurs (94, 96) ayant chacun une extrémité connectée à l'une de la seconde paire de branches du premier redresseur mentionné (76) et une extrémité opposée connectée à la masse.

**7.** Alimentation en courant selon la revendication 6, dans laquelle le second enroulement secondaire (68) comprend une prise centrale connectée à l'autre des lignes d'entrée, le second circuit filtre capacitif mentionné (106) comprend une paire de condensateurs (90, 92) ayant chacun une extrémité connectée à l'une de la seconde paire de branches du second redresseur (74) et une extrémité opposée connectée à l'autre des lignes d'entrée.